(19) **Europäisches Patentamt / European Patent Office / Office européen des brevets**

(11) **EP 4 783 111 A1**

(12) **EUROPEAN PATENT APPLICATION**
published in accordance with Art. 153(4) EPC

(43) Date of publication:
**29.07.2026 Bulletin 2026/31**

(21) Application number: **24867886.4**

(22) Date of filing: **12.07.2024**

(51) International Patent Classification (IPC):
**G06T 7/00** *(2017.01)* **G06V 10/82** *(2022.01)*

(52) Cooperative Patent Classification (CPC):
**G06T 7/00; G06V 10/774; G06V 10/82**

(86) International application number:
**PCT/JP2024/025344**

(87) International publication number:
**WO 2025/062803 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023 JP 2023153928**

(71) Applicant: **Astemo, Ltd.**
**Chiyoda-ku,**
**Tokyo 1000004 (JP)**

(72) Inventor: **HOSOYA, Naoki**
**Tokyo 100-8280 (JP)**

(74) Representative: **Strehl & Partner mbB**
**Maximilianstrasse 54**
**80538 München (DE)**

(54) **APPEARANCE INSPECTION METHOD AND MODEL GENERATION DEVICE**

(57) An appearance inspection method is an appearance inspection method of setting a normal appearance image as an appearance image of an inspection object having no abnormality as an image having no abnormality, setting a pseudo defect image obtained by superimposing a defect image element onto the normal appearance image as an image having an abnormality, and performing an appearance inspection on the inspection object by using a trained model obtained through supervised learning, and includes: a defect image element superimposition step of generating the pseudo defect image by using the normal appearance image and the defect image element; a first generation step of generating a first trained model by performing first machine learning using the pseudo defect image generated in the defect image element superimposition step as the image having an abnormality; a first appearance inspection step of performing an appearance inspection on the inspection object by inputting a first input image as an appearance image of the inspection object to the first trained model generated in the first generation step; an over-detection specification step of specifying over-detection related to the inspection object on the basis of a result of the first appearance inspection step and specifying a cause image element as the pseudo defect image which is the cause of the over-detection; a pseudo defect adjustment step of adjusting a parameter related to superimposition of the defect image element with respect to the cause image element; and a second generation step of generating a second trained model by performing second machine learning using the pseudo defect image adjusted in the pseudo defect adjustment step as the image having an abnormality.

FIG. 1

## Description

Technical Field

The present invention relates to an appearance inspection method and a model generation device.

Background Art

In the case of applying machine learning to an appearance inspection, a large number of images obtained by shooting each of a defective item and a normal item as an inspection target have to be prepared. To improve the precision of an appearance inspection, the number of images of normal items and the number of images of defective items have to be almost the same. However, the number of defective items is generally much smaller than that of good items. There is consequently a problem that images of defective items are insufficient as compared with images of normal items. Patent Literature 1 discloses a learning data generation device including: a defective-part data storage unit storing defective-part data as image data of a defective-part image; a good item data storage unit storing good item data as image data of a good item image; a trained data generation unit generating trained data as image data of a trained image obtained by adding the defective-part image to the good item image on the basis of the defective-part data, the good item data, and a generation parameter; a trained data storage unit storing the trained data; and a generation parameter setting unit setting the generation parameter.

Citation List

Patent Literature

Patent Literature 1: Japanese Unexamined Patent Application Publication No. 2020-027424

Summary of Invention

Technical Problem

The invention described in Patent Literature 1 cannot suppress over-detection.

Solution to Problem

An appearance inspection method according to a first mode of the present invention is an appearance inspection method of setting a normal appearance image as an appearance image of an inspection object having no abnormality as an image having no abnormality, setting a pseudo defect image obtained by superimposing a defect image element onto the normal appearance image as an image having an abnormality, and performing an appearance inspection on the inspection object by using a trained model obtained through supervised learning, and includes: a defect image element superimposition step of generating the pseudo defect image by using the normal appearance image and the defect image element; a first generation step of generating a first trained model by performing first machine learning using the pseudo defect image generated in the defect image element superimposition step as the image having an abnormality; a first appearance inspection step of performing an appearance inspection on the inspection object by inputting a first input image as an appearance image of the inspection object to the first trained model generated in the first generation step; an over-detection specification step of specifying over-detection related to the inspection object on the basis of a result of the first appearance inspection step and specifying a cause image element as the pseudo defect image which is the cause of the over-detection; a pseudo defect adjustment step of adjusting a parameter related to superimposition of the defect image element with respect to the cause image element; and a second generation step of generating a second trained model by performing second machine learning using the pseudo defect image adjusted in the pseudo defect adjustment step as the image having an abnormality.

A model generation device according to a second mode of the present invention is a model generation device of setting a normal appearance image as an appearance image of an inspection object having no abnormality as an image having no abnormality, setting a pseudo defect image obtained by superimposing a defect image element onto the normal appearance image as an image having an abnormality, and generating a trained model through supervised learning, and includes: a defect image element superimposition program of generating the pseudo defect image by using the normal appearance image and the defect image element; a first generation program of generating a first trained model by performing first machine learning using the pseudo defect image generated by the defect image element superimposition program as the image having an abnormality; a first appearance inspection program of performing an appearance inspection on the inspection object by inputting a first input image as an appearance image of the inspection object to the first trained model generated by the first generation program; an over-detection specification program of specifying over-detection related to the inspection object on the basis of a result of the first appearance inspection program and specifying a cause image element as the pseudo defect image which is the cause of the over-detection; a pseudo defect adjustment program of adjusting a parameter related to superimposition of the defect image element with respect to the cause image element; and a second generation program of generating a second trained model by performing second machine learning using the pseudo defect image adjusted by the pseudo defect adjustment program as the image having an abnormality.

Advantageous Effects of Invention

According to the present invention, over-detection can be suppressed.

Brief Description of Drawings

FIG. 1 is a configuration diagram of a model generation device.
FIG. 2 is a diagram explaining various images in a present embodiment.
FIG. 3 is an external view of a piston as an inspection object.
FIG. 4 is a diagram illustrating an example of a pseudo defect image.
FIG. 5 is a diagram illustrating generation of pseudo defect images by a defect image element superimposition program.
FIG. 6 is a diagram illustrating generation of a subdivided pseudo defect image by the defect mage element superimposition program.
FIG. 7 is a flowchart illustrating outline of processes of a model generation device.
FIG. 8 is a diagram illustrating an example of over-detection and a cause image element.
FIG. 9 is a diagram illustrating a first example of parameter adjustment by a defect adjustment program.
FIG. 10 is a diagram illustrating a second example of the parameter adjustment by the defect adjustment program.
FIG. 11 is a diagram illustrating specification of a cause image element in a second embodiment.
FIG. 12 is a diagram illustrating a shooting unit in a third embodiment.
FIG. 13 is a diagram illustrating a process of a defect image element superimposition program in the third embodiment.
Description of Embodiments

First Embodiment

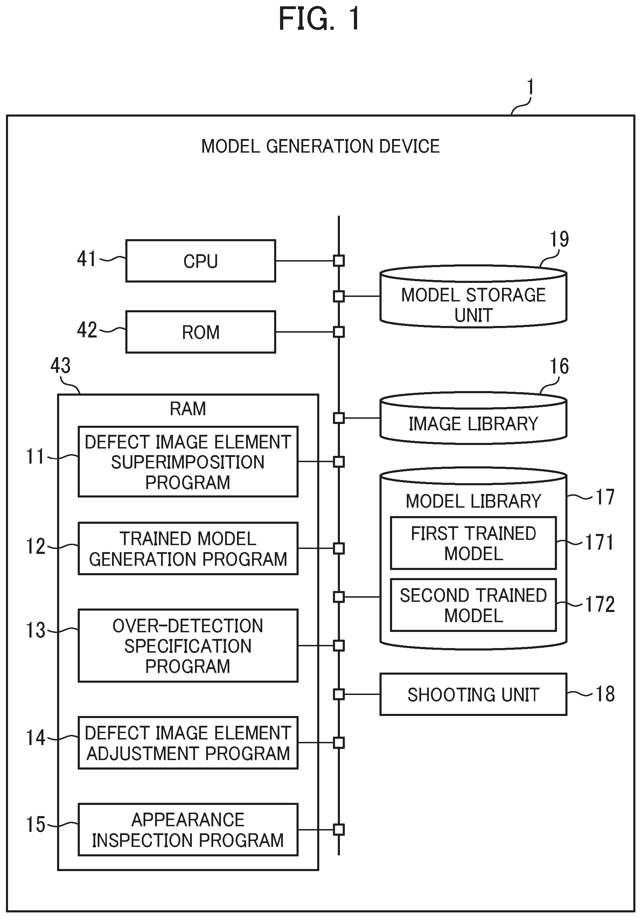

Hereinafter, a first embodiment of a model generation device will be described with reference to FIGS. 1 to 10.
FIG. 1 is a configuration diagram of a model generation device 1. The model generation device 1 has a CPU 41 as a central processing unit, a ROM 42 as a read-only storage device, a RAM 43 as a readable/writable storage device, an image library 16, a model library 17, and a shooting unit 18. It has an input/output device 44 as a user interface and a communication device 45. The CPU 41 expands a program stored in the ROM 42 into the RAM 43 and executes it. In the RAM 43, a defect image element superimposition program 11, a trained model generation program 12, an appearance inspection program 15, an over-detection specification program 13, and a defect adjustment program 14 are expanded.
The model generation device 1 may be also realized by an FPGA (Field Programmable Gate Array) as a rewritable logic circuit or an ASIC (Application Specific Integrated Circuit) as an integrated circuit for specific application in place of the combination of the CPU 41, the ROM 42, and the RAM 43. In place of the combination of the CPU 41, the ROM 42, and the RAM 43, the model generation device 1 may be also realized by a combination of different configurations, for example, a combination of the CPU 41, the ROM 42, the RAM 43, and an FPGA. Before explaining the configuration illustrated in FIG. 1, various images in the present embodiment will be described.

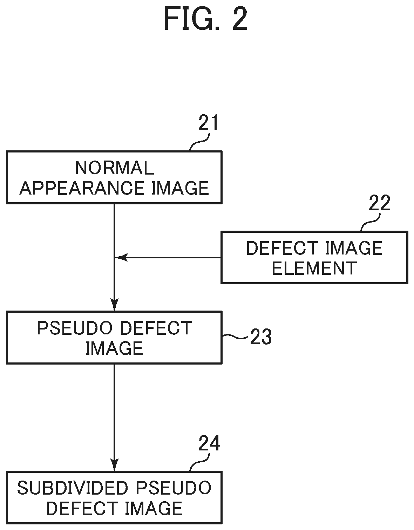

FIG. 2 is a diagram explaining various images in the present embodiment. A normal appearance image 21 is obtained by the shooting unit 18. By using the normal appearance image 21 and a defect image element 22, a pseudo defect image 23 is generated. As will be described specifically later, a plurality of pseudo defect images 23 are generated by a set of the normal appearance image 21 and the defect image element 22. The pseudo defect image 23 is divided into a plurality of regions, and each of the divided images will be called a subdivided pseudo defect image 24. In FIG. 2, for convenience in drawing, one normal appearance image 21, one defect image element 22, one pseudo defect image 23, and one subdivided pseudo defect image 24 are illustrated. However, as described above, the numbers are different. Specifically, a plurality of pseudo defect images 23 are generated by using one set of the normal appearance image 21 and the defect image element 22, and a plurality of subdivided pseudo defect images 24 are generated for the respective pseudo defect images 23. Referring again to FIG. 1, description will be continued.

In the model library 17, a first trained model 171 and a second trained model 172 are stored. Each of the first and second trained models 171 and 172 is generated by the trained model generation program 12. The shooting unit 18 shoots an inspection object and outputs a shot image as an image obtained by the shooting. The shot image is the normal appearance image 21 and an input image to the appearance inspection program 15. A shot image of the shooting unit 18 may be temporarily stored in the image library 16. In this case, a shot image of an inspection object which is recognized as a non-defective one in advance may be stored as the normal appearance image 21.

The defect image element superimposition program 11 superimposes the defect image element 22 on the normal appearance image 21 as an appearance image of the non-defective inspection object to generate the pseudo defect image 23 and the subdivided pseudo defect images 24. The trained model generation program 12 performs machine learning by using the subdivided pseudo defect images 24 and generates the first and second trained models 171 and 172. A trained model generated by the defect image element superimposition program 11 by using the subdivided pseudo defect images 24 without performing adjustment by the defect adjustment program 14 is the first trained model 171. A trained model generated by the defect image element superimposition program 11 by using the subdivided pseudo defect images 24 adjusted by the defect adjustment program 14 is the second trained model 172. As learning by the trained model generation program 12, it is preferable to use machine learning such as Deep Neural Network or Support Vector Machine using an image for learning as an input.

The appearance inspection program 15 performs an appearance inspection on an object to be inspected by inputting a shot image which is output from the shooting unit 18 to a trained model. Hereinafter, an appearance inspection using the first trained model 171 will be called a "first appearance inspection", and an appearance inspection using the second trained model 172 will be called a "second appearance inspection". The over-detection specification program 13 specifies over-detection for an output result of the first appearance inspection as a target. An over-detection specifying method will be described later. The defect adjustment program 14 adjusts a parameter related to superimposition of the defect image element 22 for a specific element in the pseudo defect image 23 as the cause of over-detection (hereinafter, called "cause image element"), which is specified by the over-detection specification program 13. Concretely, the defect adjustment program 14 adjusts a parameter such as luminance, size, angle, or the like of the cause image element so as to decrease similarity to an over-detection part 402, of the cause image element. The cause image element is one of the defect image elements 22.

The first trained model 171 and the second trained model 172 input a shot image and output a determination result of an inspection and coordinates in which a defect is detected. The normal appearance image 21 is read together with information indicating that there is no abnormality by the trained model generation program 12. Regarding the subdivided pseudo defect image 24, coordinates of the defect image element 22 are read together with information indicating that there is an abnormality by the trained model generation program 12. The trained model generation program 12 learns parameters of the first and second trained models 171 and 172 so as to output information that there is no abnormality when the normal appearance image 21 is input. When the subdivided pseudo defect image 24 is input, the trained model generation program 12 learns parameters of the first and second trained models 171 and 172 so as to output information indicating that there is an abnormality and coordinates of the defect image element 22.

The process executed by the defect image element superimposition program 11 will be called a "defect image element superimposition step". The generation of the first trained model 171 by the trained model generation program 12 will be also called a "first generation step", and the generation of the second trained model 172 will be also called a "second generation step". The process executed by the appearance inspection program 15 will be also called an "appearance inspection step". The process executed by the over-detection specification program 13 will be called an "over-detection specification step". The process executed by the defect adjustment program 14 will be also called a "pseudo defect adjustment step". The trained model generation program 12 is divided into a first generation program of generating the first trained model 171 and a second generation program of generating the second trained model 172.

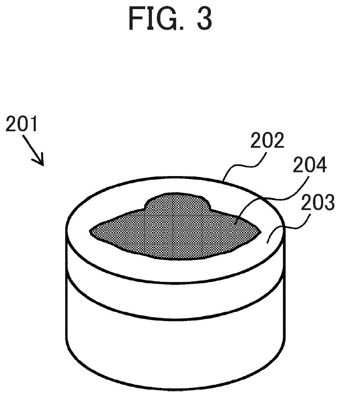

FIG. 3 is an external view of a piston 201 of an engine for an automobile as an inspection object in the present embodiment. The piston 201 is a casting part having an almost cylindrical shape. In a crown surface 202 as the upper side in the diagram of the piston 201, a casting surface part 203 and a mechanical process surface 204 obtained by mechanically processing the casting surface part 203 are illustrated.

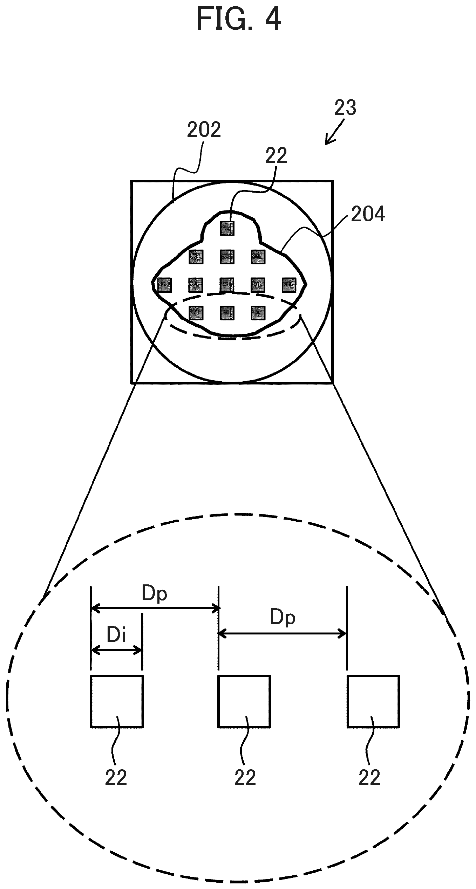

FIG. 4 is a diagram illustrating an example of the pseudo defect image 23. The pseudo defect image 23 in the diagram is an image obtained by superimposing 12 pieces of defect image elements 22 on the normal appearance image 21 derived by shooting the crown surface 202 having no abnormality from directly above. The defect image element 22 may be an image obtained by cutting a defect part in a defective item image or an artificial image generated so as to look like a defect. As illustrated in an enlarged view in the lower part of FIG. 4, in the following description, the dimension of the defect image element 22 will be called an element dimension D1, and an interval of the defect image elements 22 arranged in a lattice state will be called a defect disposition interval Dp. In the present embodiment, to simplify the description, dimensions and intervals are set to be similar also in the vertical direction of the diagram. The dimension and the interval in the vertical direction in the diagram and those in the horizontal direction in the diagram may not be the same. In other words, it will be described in the present embodiment that the defect image element 22 has a square shape. However, the defect image element 22 may have a rectangular shape. "No abnormality" means here that there is no defect in an inspection but it includes a small roughness which is not recognized as a defect.

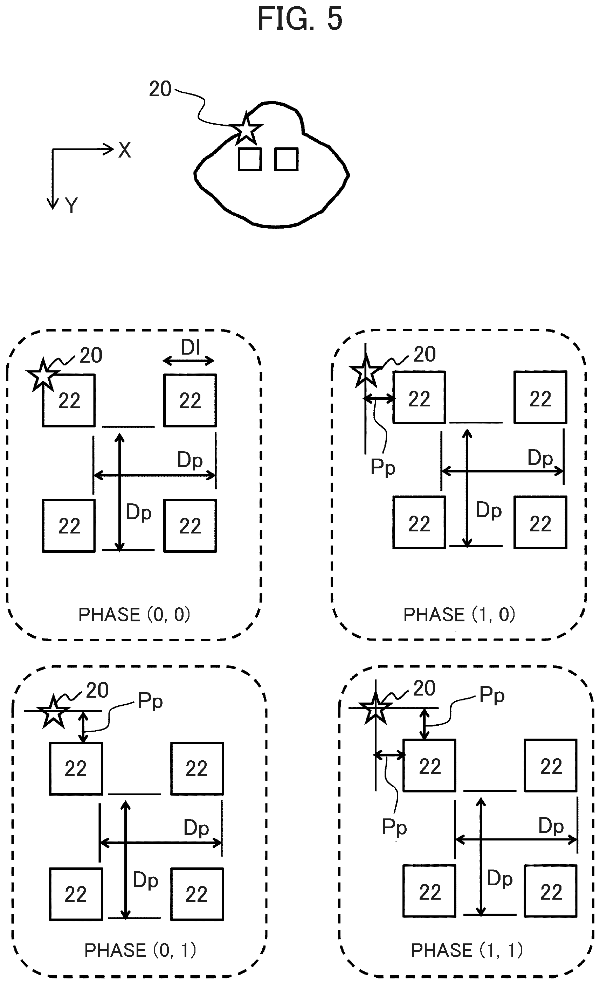

FIG. 5 is a diagram illustrating generation of the pseudo defect images 23 by the defect image element superimposition program 11. The defect image element superimposition program 11 first defines a coordinate system using an arbitrary point in the normal appearance image 21 as a reference point 20 as the origin. The reference point 20 and the coordinate system are common to the normal appearance image 21 and all of the pseudo defect images 23. In the present embodiment, changing of a start position of a superimposition position of the defect image element 22 will be expressed by the concept of a "phase". The defect image element superimposition program 11 generates a pseudo defect image 23 in a phase (0, 0) as the first pseudo defect image 23. In the pseudo defect image 23 in the phase (0, 0), the first defect image element 22 is disposed at the origin. The defect image element superimposition program 11 disposes the defect image elements 22 one after another in positions apart by the defect disposition interval Dp in the X axis direction and the Y axis direction using the first defect image element 22 as a starting point.

In the pseudo defect image 23 in the phase (1, 0), a first defect image element 22 is disposed in a position shifted from the reference point 20 only by a phase interval Pp only in the X direction. Since the disposition of the second and subsequent defect image elements 22 is similar to the above, the description will be omitted hereinafter. In the pseudo defect image 23 in the phase (0, 1), a first defect image element 22 is disposed in a position shifted from the reference point 20 only by the phase interval Pp only in the Y direction. In the pseudo defect image 23 in the phase (1, 1), a first defect image element 22 is disposed in a position shifted from the reference point 20 only by the phase interval Pp in each of the X and Y directions. To make it generalized, in the pseudo defect image 23 in the phase (n, m), the first defect image element 22 is disposed in a position shifted from the reference point 20 only by n times of the phase interval Pp in the X direction and only by m times of the phase interval Pp in the Y direction.

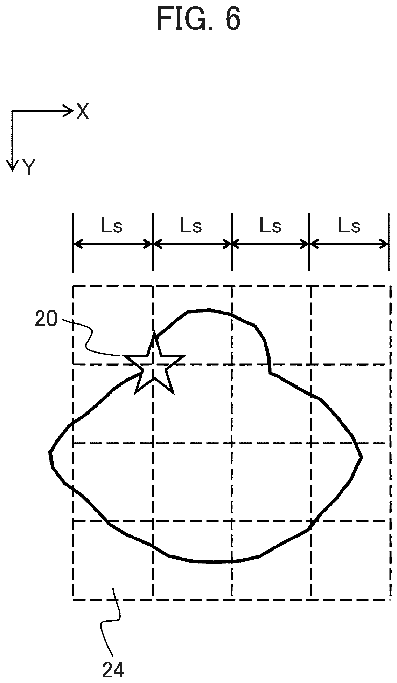

FIG. 6 is a diagram illustrating generation of the subdivided pseudo defect image 24 by the defect image element superimposition program 11. As described above, by subdividing the pseudo defect image 23, the defect image element superimposition program 11 generates the subdivided pseudo defect images 24. The defect image element superimposition program 11 generates, as the subdivided pseudo defect images 24, regions divided at intervals of cutout dimension Ls which is determined in advance always using the reference point 20 as a criterion. The lattice is, for example, parallel to the X axis and the Y axis. The defect image element superimposition program 11 may not generate the subdivided pseudo defect images 24 in reality. That is, the defect image element superimposition program 11 may handle each of the regions of the pseudo defect image 23 as the subdivided pseudo defect image 24.

The above-described element dimension D1, the cutout dimension Ls, the phase interval Pp, and the defect disposition interval Dp satisfy the following relational expressions.

$$Dp > Ls + Dl \quad ... \quad (Math. \ 1)$$

$$Dp < Ls + Dl + Pp \quad ... \quad (Math. \ 2)$$

When equations of the mathematical expressions 1 and 2 are satisfied, only one defect image element 22 exists in each subdivided pseudo defect image 24, and the defect image element 22 exists in the same position in the subdivided pseudo defect images 24.

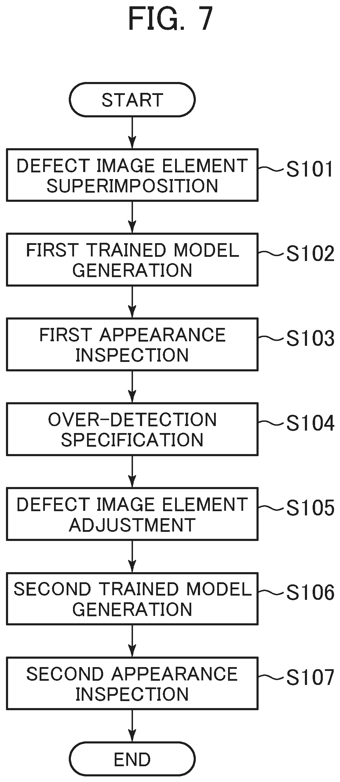

FIG. 7 is a flowchart illustrating outline of processes of the model generation device 1. In the model generation device 1, first, in step S101, the defect image element superimposition program 11 generates the pseudo defect image 23 and the subdivided pseudo defect images 24. Subsequently, the trained model generation program 12 generates the first trained model 171 by using the subdivided pseudo defect images 24. In the following step S103, the appearance inspection program 15 performs a first appearance inspection by using the first trained model 171. In the following step S104, the over-detection specification program 13 specifies over-detection in the first appearance inspection.

In the following step S105, the defect adjustment program 14 adjusts the defect pixel element, and the defect image element superimposition program 11 generates the subdivided pseudo defect images 24 again. In the following step S106, the trained model generation program 12 generates the second trained model 172 by using the subdivided pseudo defect images 24 generated in step S105. In the following step S107, the appearance inspection program 15 performs a second appearance inspection by using the second trained model 172.

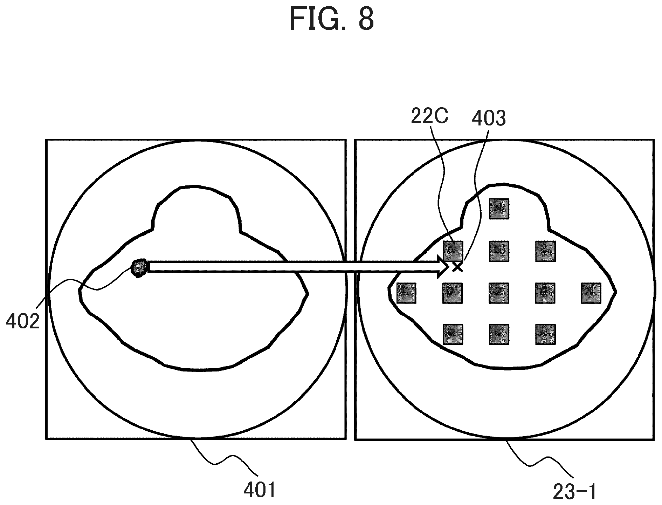

FIG. 8 is a diagram illustrating an example of over-detection and the cause image element. An over-detection image 401 in which over-detection occurs is illustrated in the left part of FIG. 8, and a pseudo defect image 23-1 is illustrated in the right part of FIG. 8. In the example illustrated in FIG. 8, the over-detection part 402 exists in a position which is almost center and is closer to the left in the over-detection image 401. The fact that the over-detection part 402 is over-detected, in other words, the over-detection part 402 is not an abnormality to be normally detected by the appearance inspection program 15 can be checked by any of the following methods.

A first method is a method of setting all of images which are input to the first trained model 171 to normal images.

For example, a shot image obtained by shooting an inspection object which passed an inspection is input to the first trained model 171, or a shot image which is preliminarily checked as a normal image by a human is input to the first trained model 171. A second method is a method of making a check by inputting an image to another appearance inspection means which has no relation to the model library 17. Specifically, a shot image in which a defect is detected by the first trained model 171 is input to another appearance inspection means which has no relation to the model library 17 and, when the appearance inspection means does not detect an abnormality, over-detection is determined.

When over-detection is detected, the over-detection specification program 13 makes a collision of the coordinates of the over-detection part 402 on the pseudo defect image 23-1, and determines corresponding coordinates 403. The defect image element 22 closest to the corresponding coordinates 403 is specified as a cause image element 22C as the cause of the over-detection. As described above, a plurality of pseudo defect images 23 are generated, so that the cause image element 22C is specified in each of the plurality of pseudo defect images 23.

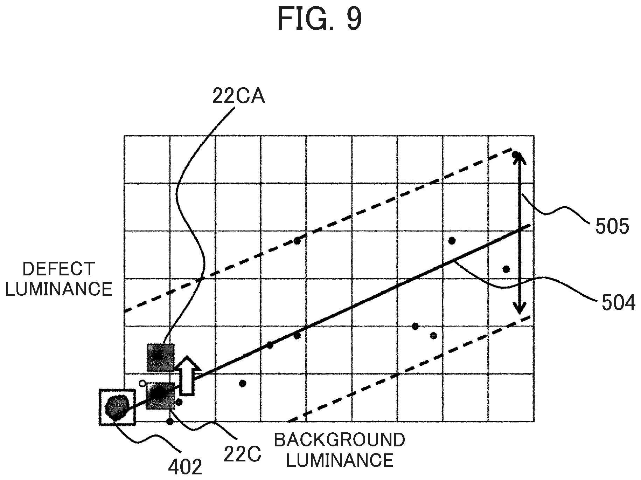

FIG. 9 is a diagram illustrating a first example of the parameter adjustment by the defect adjustment program 14. In this example, the defect adjustment program 14 adjusts the luminance of the cause image element 22C. In FIG. 9, the horizontal axis indicates luminance of the background of the defect image element 22 (hereinafter, also called "background luminance"), and the vertical axis indicates luminance of the defect image element 22 (hereinafter, also called "defect luminance"). For example, the background luminance is luminance at the brightest point in the defect image element 22, and the missing luminance is luminance at the darkest point in the defect image element 22. For example, the background luminance is an average value of luminance around the defect image element 22 in the defect image element 22, and the missing luminance is an average value of the luminance in the defect image element 22.

In FIG. 9, points corresponding to the background luminance and the defect luminance in each of the defect image elements 22 as defects detected in the past are plotted by white circles. In each of the plots, the defect luminance has a relation of almost monotonic increase with respect to the background luminance, and its regression line 504 is indicated by the solid line. By upper and lower dotted lines of the regression line 504, a defect possibility range 505 as a range having the possibility of a defect is illustrated. In FIG. 9, the cause image element 22C specified by the over-detection specification program 13 is similarly plotted. However, since the over-detection part 402 is an over-detection, it indicates the relation between the luminance of the background of the part which is erroneously determined as a defect and the luminance of the part which is erroneously determined as a defect.

The defect adjustment program 14 adjusts the parameter of the cause image element 22C so as to decrease similarity to the over-detection part 402. In FIG. 9, the defect luminance of the cause image element 22C is increased so that the distance between the cause image element 22C and the over-detection part 402 increases. Since an extreme change is unpreferable, adjustment is performed in the range so that the adjusted defect luminance lies within the defect possibility range 505. It is desirable to adjust the cause image element 22C so that not only the difference between the over-detection part 402 and the cause image element 22C simply increases but also the difference between the distance to the regression line 504 and the over-detection part 402 increases.

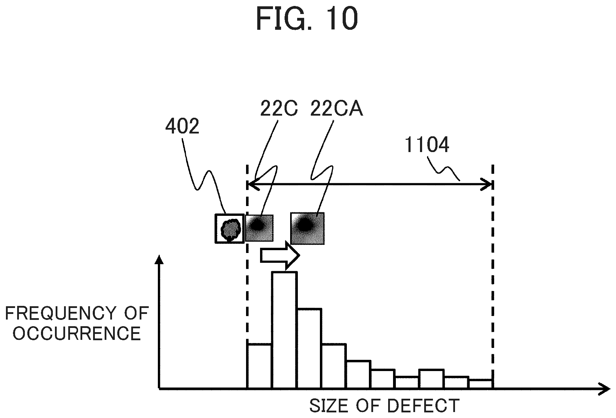

FIG. 10 is a diagram illustrating a second example of the parameter adjustment by the defect adjustment program 14. In a histogram illustrated in FIG. 10, the horizontal axis indicates the size of a defect, and the vertical axis indicates frequency of occurrence by size of a defect. In the histogram, defects detected in the past are plotted on the basis of their sizes and occurrence frequencies. The right and left dotted lines of the histogram indicate a defect possibility range 1104 as a range in which there is the possibility of a defect on the basis of the defects detected so far.

The defect adjustment program 14 plots the over-detection part 402 specified by the over-detection specification program 13 onto the histogram on the basis of its size. The defect adjustment program 14 also similarly plots the cause image element 22C specified as the cause of the over-detection. The defect adjustment program 14 adjusts the parameter of the cause image element 22C so as to decrease the similarity to the over-detection part 402 to thereby obtain an adjusted cause image element 22D. That is, in the example of FIG. 10, the cause image element 22C is increased so as to be away from the plot position of the over-detection part 402 to obtain the adjusted cause image element 22D. The adjustment amount is set within the range of the defect possibility range 1104.

According to the above-described first embodiment, the following operation effects are obtained.

(1) The model generation device 1 sets the normal appearance image 21 as an appearance image of an inspection object having no abnormality as an image having no abnormality, sets the pseudo defect image 23 obtained by superimposing the defect image element 22 on the normal appearance image 21 as an image having an abnormality, and performs an appearance inspection on an inspection object by using a trained model obtained through supervised learning. The defect image element superimposition program 11 executes a defect image element superimposition step of generating the pseudo defect image 23 by using the normal appearance image 21 and the defect image element 22. The trained model generation program 12 executes a first generation step of generating the first trained model 171 by performing first machine learning using, as an image having an abnormality, the pseudo defect image 23 generated in the defect image element superimposition step. The appearance inspection program 15 executes a first appearance inspection step of inputting a first input image as an appearance image of an inspection object to the first trained model 171 generated in the first generation step and performing an appearance inspection on the inspection object. The over-detection specification program 13 executes an over-detection specification step of specifying over-detection related to an inspection object on the basis of a result of the first appearance inspection step, and specifying the cause image element 22C as the pseudo defect image 23 as the cause of the over-detection. The defect adjustment program 14 executes a pseudo defect adjustment step of performing adjustment of a parameter related to superimposition of the defect image element 22, on the cause image element 22C. The trained model generation program 12 executes a second generation step of generating the second trained model 172 by performing second machine learning using, as an image having an abnormality, the pseudo defect image 23 adjusted by the defect adjustment program 14. As described above, since the second trained model 172 is generated after trained data is corrected so that the over-detection which occurs in the first trained model 171 does not occur, over-detection can be suppressed by using the second trained model 172.

(2) The defect adjustment program 14 adjusts at least one parameter out of the luminance, size, and angle of the defect image element 22 so as to decrease similarity to the over-detection part 402, of the cause image element 22C. Consequently, trained data can be corrected from the viewpoints of luminance, size, and angle in order to prevent over-detection.

(3) In the first and second generation steps, the first and second trained models 171 and 172 are generated by using the subdivided pseudo defect images 24 obtained by dividing the pseudo defect image 23 into a lattice shape. In the defect image element superimposition step, the defect image elements 22 are disposed in a lattice shape so that only one defect image element 22 exists in each of the subdivided pseudo defect images 24 and the defect image elements 22 exist in the same positions in the subdivided pseudo defect images 24, and are superimposed on the normal appearance image 21. Therefore, by preparing an image for learning adapted to the specifications of the trained model generation program 12, learning can be performed efficiently.

(Modification 1)

In the above-described first embodiment, the defect adjustment program 14 adjusts the luminance or size of the defect image element 22 as illustrated in FIGS. 9 and 10 so as to decrease similarity of the cause image element 22C to the over-detection part 402. However, the defect adjustment program 14 may adjust at least one parameter out of the luminance, size, and angle of the defect image element 22 so as to decrease similarity of the cause image element 22C to the over-detection part 402. For example, the defect adjustment program 14 may adjust the angle of the cause image element 22C or both of the luminance and size of the cause image element 22C.

Second Embodiment

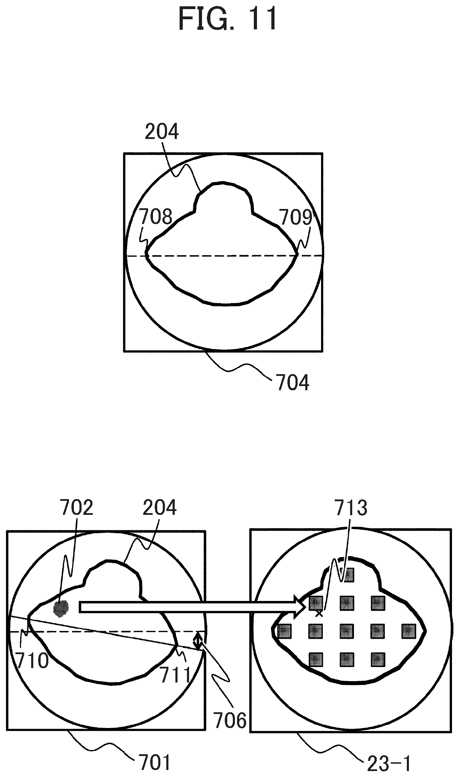

A second embodiment of the model generation device will be described with reference to FIG. 11. In the following description, the same reference numeral is designated to the same component as that in the first embodiment, and different points will be mainly described. The points which will not be described are the same as those of the first embodiment. The present embodiment is different from the first embodiment with respect to mainly the point corresponding to rotation of a shot image.

FIG. 11 is a diagram illustrating specification of the cause image element 22C in a second embodiment. The process which will be described hereinafter is an additional process executed by the over-detection specification program 13. A shot image in the case where an inspection object does not turn is illustrated in the upper part of FIG. 11. The over-detection specification program 13 detects a turn by using a left end 708 and a right end 709 in the mechanical process surface 204 of a shot image 704 as references. A shot image 701 illustrated in the lower left part of FIG. 11 includes a detection part 702 which is detected by the over-detection specification program 13. The shot image 701 is obtained when the inspection object turns slightly. The over-detection specification program 13 calculates a posture error 706 from a deviation amount of the left end 711 and the right end 712 in the shot image 701. The over-detection specification program 13 calculates corresponding coordinates 713 in the pseudo defect image 23-1 by using the posture error 706 with high precision. Since the process after calculation of the corresponding coordinates 713 is similar to that in the first embodiment, the description will not be repeated.

According to the above-described second embodiment, the following operation effects are obtained.

(4) The pseudo defect image 23 is obtained when an inspection object is in a reference posture. In an over-detection specification step, a posture error as a change amount from the reference posture of the inspection object in a first input image is detected, the first input image is converted on the basis of the posture error, and the cause image element 22C is specified. That is, in the case where the positioning precision of an inspection object is low, the shot image 701 is converted, that is, turned on the basis of the calculated posture error, and the cause image element 22C is specified. Consequently, the over-detection specification program 13 can accurately specify the cause image element 22C.

Third Embodiment

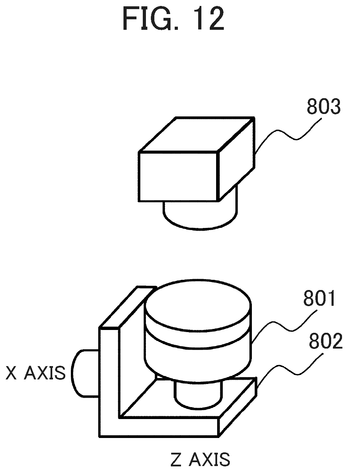

A third embodiment of the model generation device will be described with reference to FIGS. 12 to 13. In the following description, the same reference numeral is designated to the same component as that in the first embodiment, and different points will be mainly described. The points which will not be described are the same as those of the first embodiment. The present embodiment is different from the first embodiment mainly with respect to the point that the normal appearance image 21 is obtained by shooting from a plurality of angles, and the defect image element 22 is deformed according to the angles.

FIG. 12 is a diagram illustrating the shooting unit 18 in the third embodiment. The shooting unit 18 includes a jig 802 and a shooting device 803. The jig 802 is a jig having two rotary shafts capable of changing the posture of an inspection object 801. The shooting unit 18 obtains the normal appearance images 21 as appearance images of a non-defective inspection object in a plurality of postures in cooperating operation with the jig 802. That is, in the present present, a plurality of appearance images of one non-defective inspection object are captured while changing the relative positions and relative angles between the inspection object 801 and the shooting device 803.

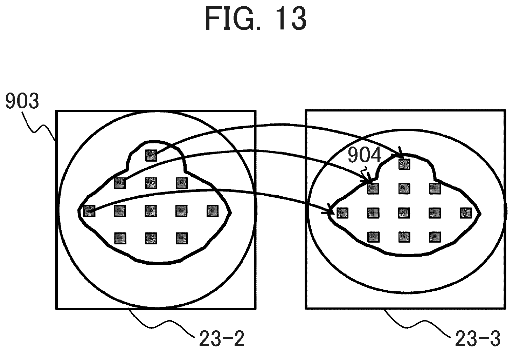

FIG. 13 is a diagram illustrating a process of the defect image element superimposition program 11 in the third embodiment. In the present embodiment, the defect image element superimposition program 11 makes adjustment so that the position and the size of the defect image element 22 in the mechanical process surface 204 do not change even when the position and the posture change. Specifically, the defect image element superimposition program 11 superimposes the defect image element 22 onto each of the normal appearance images 21 in consideration of the relative position and the relative angle between the inspection object 801 and the shooting device 803. While the pseudo defect image 23-2 is based on a shot image obtained by shooting from just above, a pseudo defect image 23-3 based on a shot image obtained by shooting obliquely has a shape collapsed in the vertical direction. In this case as well, the defect image element 22 is superimposed in a position subjected to the coordinate conversion on the basis of the relative angle, so that there is no contradiction between the two images. In other words, a defect is expressed as if it really exists in the mechanical process surface 204.

For example, in the case where the inspection object 801 is disposed at an angle with respect to the shooting device 803, the defect image element superimposition program 11 makes the defect image element 22 deformed according to the angle and, then, superimposes it onto the normal appearance image 21. The defect image element superimposition program 11 may calculate the relative position and the relative angle between the inspection object 801 and the shooting device 803 by imaging process. At the time of obtaining the normal appearance image 21, a not-illustrated recording device may record the posture of the jig 802 and associate it with the normal appearance image 21.

The defect image element superimposition program 11 may use three-dimensional data of the piston 201 as an inspection object. For example, three-dimensional data indicating a three-dimensional shape of the mechanical process surface 204 is derived from a design drawing. It is also possible to paste an attachment of the defect image element 22 to the three-dimensional data and perform writing, so-called, rendering of a two-dimensional image from a plurality of angles.

According to the above-described third embodiment, the following operation effects are obtained.

(5) The normal appearance images 21 are a plurality of images obtained by shooting an inspection object from a plurality of angles. In the defect image element superimposition step, the defect image element 22 is superimposed to a position obtained by performing coordinate conversion to each of the normal appearance images 21 on the basis of angles. Therefore, since the defect image element 22 is superimposed to positions corresponding to a plurality of postures, the cause image element 22C as the cause in the case where over-detection occurs exists always in positions corresponding to the plurality of postures. By specifying them in a lump and adjusting them one by one, the adjustment can be performed efficiently.

In the embodiments and the modification described above, the configuration of the function blocks is just an example. Some function configurations indicated as separate function blocks may be configured integrally. The configuration expressed by one function block diagram may be divided into two or more functions. A configuration that a part of the functions of the function blocks is provided for another function block is also possible.

In each of the embodiments and the modification described above, a program is stored in the ROM 42. Alternatively, a program may be stored in a nonvolatile storage device. The model generation device 1 may have a not-illustrated input/output interface and, as necessary, a program may be loaded from another device via the input/output interface and a medium which can be used by the model generation device 1. The medium refers to, for example, a recording medium which can be attached/detached to/from the input/output interface, a communication device, specifically, a wired network, a wireless network, a light network, or the like, or a carrier wave or digital signal which can propagate through the network. A part or all of functions realized by a program may be realized by a hardware circuit or an FPGA.

The embodiments and the modification described above may be combined. Although the various embodiments and the modification have been described above, the present invention is not limited to the content of them. Other modes which can lie within the scope of the technical ideas of the present invention are also included in the scope of the present

## EP 4 783 111 A1

invention.

List of Reference Signs

1: model generation device
11: defect image element superimposition program
12: trained model generation program
13: over-detection specification program
14: defect adjustment program
15: appearance inspection program
21: normal appearance image
22: defect image element
22C: cause image element
22D: adjusted cause image element
23: pseudo defect image
24: subdivided pseudo defect image
171: first trained model
172: second trained model

## Claims

1. An appearance inspection method of setting a normal appearance image as an appearance image of an inspection object having no abnormality as an image having no abnormality, setting a pseudo defect image obtained by superimposing a defect image element onto the normal appearance image as an image having an abnormality, and performing an appearance inspection on the inspection object by using a trained model obtained through supervised learning, comprising:

   a defect image element superimposition step of generating the pseudo defect image by using the normal appearance image and the defect image element;
   a first generation step of generating a first trained model by performing first machine learning using the pseudo defect image generated in the defect image element superimposition step as the image having an abnormality;
   a first appearance inspection step of performing an appearance inspection on the inspection object by inputting a first input image as an appearance image of the inspection object to the first trained model generated in the first generation step;
   an over-detection specification step of specifying over-detection related to the inspection object on the basis of a result of the first appearance inspection step and specifying a cause image element as the pseudo defect image which is the cause of the over-detection;
   a pseudo defect adjustment step of adjusting a parameter related to superimposition of the defect image element with respect to the cause image element; and
   a second generation step of generating a second trained model by performing second machine learning using the pseudo defect image adjusted in the pseudo defect adjustment step as the image having an abnormality.

2. The appearance inspection method according to claim 1,
   wherein in the pseudo defect adjustment step, at least one parameter out of luminance, size, and angle of the defect image element is adjusted so as to decrease similarity to an over-detection part of the cause image element.

3. The appearance inspection method according to claim 1,

   wherein in the first and second generation steps, the first and second trained models are generated by using subdivided pseudo defect images obtained by dividing the pseudo defect image into a lattice shape; and
   in the defect image element superimposition step, the defect image elements are disposed in a lattice shape and superimposed on the normal appearance image so that only one defect image element exists in each of the subdivided pseudo defect images and the defect image elements exist in the same position in the subdivided pseudo defect images.

4. The appearance inspection method according to claim 1,
   wherein the pseudo defect image is shot in a state where the inspection object is in a reference posture, and
   in the over-detection specification step, a posture error as a change amount from the reference posture of the inspection object in the first input image is detected, the first input image is converted on the basis of the posture error, and the cause image element is specified.

5. The appearance inspection method according to claim 1,

   wherein the normal appearance image is a plurality of images obtained by shooting the inspection object from a plurality of angles, and
   in the defect image element superimposition step, the defect image element is superimposed in a position subjected to coordinate conversion based on the angles onto each of the normal appearance images.

6. A model generation device of setting a normal appearance image as an appearance image of an inspection object having no abnormality as an image having no abnormality, setting a pseudo defect image obtained by superimposing a defect image element onto the normal appearance image as an image having an abnormality, and generating a trained model through supervised learning, comprising:

   a defect image element superimposition program of generating the pseudo defect image by using the normal appearance image and the defect image element;
   a first generation program of generating a first trained model by performing first machine learning using the pseudo defect image generated by the defect image element superimposition program as the image having an abnormality;
   a first appearance inspection program of performing an appearance inspection on the inspection object by inputting a first input image as an appearance image of the inspection object to the first trained model generated by the first generation program;
   an over-detection specification program of specifying over-detection related to the inspection object on the basis of a result of the first appearance inspection program and specifying a cause image element as the pseudo defect image which is the cause of the over-detection;
   a pseudo defect adjustment program of adjusting a parameter related to superimposition of the defect image element with respect to the cause image element; and
   a second generation program of generating a second trained model by performing second machine learning using the pseudo defect image adjusted by the pseudo defect adjustment program as the image having an abnormality.

# FIG. 1

1

**MODEL GENERATION DEVICE**

41 — CPU

42 — ROM

43 — RAM

11 — DEFECT IMAGE ELEMENT SUPERIMPOSITION PROGRAM

12 — TRAINED MODEL GENERATION PROGRAM

13 — OVER-DETECTION SPECIFICATION PROGRAM

14 — DEFECT IMAGE ELEMENT ADJUSTMENT PROGRAM

15 — APPEARANCE INSPECTION PROGRAM

19 — MODEL STORAGE UNIT

16 — IMAGE LIBRARY

MODEL LIBRARY — 17

FIRST TRAINED MODEL — 171

SECOND TRAINED MODEL — 172

SHOOTING UNIT — 18

# FIG. 2

NORMAL
APPEARANCE IMAGE 21

DEFECT IMAGE
ELEMENT 22

PSEUDO DEFECT
IMAGE 23

SUBDIVIDED PSEUDO
DEFECT IMAGE 24

FIG. 3

# FIG. 4

# FIG. 5

PHASE (0, 0)

PHASE (1, 0)

PHASE (0, 1)

PHASE (1, 1)

# FIG. 6

# FIG. 7

```
                    ┌─────────────┐
                    │    START    │
                    └─────────────┘
                           │
                           ▼
        ┌───────────────────────────────┐
        │   DEFECT IMAGE ELEMENT        │────S101
        │      SUPERIMPOSITION          │
        └───────────────────────────────┘
                           │
                           ▼
        ┌───────────────────────────────┐
        │     FIRST TRAINED MODEL       │────S102
        │        GENERATION             │
        └───────────────────────────────┘
                           │
                           ▼
        ┌───────────────────────────────┐
        │      FIRST APPEARANCE         │────S103
        │        INSPECTION             │
        └───────────────────────────────┘
                           │
                           ▼
        ┌───────────────────────────────┐
        │       OVER-DETECTION          │────S104
        │       SPECIFICATION           │
        └───────────────────────────────┘
                           │
                           ▼
        ┌───────────────────────────────┐
        │   DEFECT IMAGE ELEMENT        │────S105
        │        ADJUSTMENT             │
        └───────────────────────────────┘
                           │
                           ▼
        ┌───────────────────────────────┐
        │   SECOND TRAINED MODEL        │────S106
        │        GENERATION             │
        └───────────────────────────────┘
                           │
                           ▼
        ┌───────────────────────────────┐
        │     SECOND APPEARANCE         │────S107
        │        INSPECTION             │
        └───────────────────────────────┘
                           │
                           ▼
                    ┌─────────────┐
                    │     END     │
                    └─────────────┘
```

# FIG. 8

# FIG. 9

22CA

DEFECT
LUMINANCE

505

504

402  22C  BACKGROUND
LUMINANCE

# FIG. 10

# FIG. 11

FIG. 12

803

801

802

X AXIS

Z AXIS

# FIG. 13

## INTERNATIONAL SEARCH REPORT

| International application No. |
| --- |
| **PCT/JP2024/025344** |

| A. | CLASSIFICATION OF SUBJECT MATTER |
| --- | --- |

*G06T 7/00*(2017.01)i; *G06V 10/82*(2022.01)i
FI:  G06T7/00 350C; G06V10/82; G06T7/00 610C

According to International Patent Classification (IPC) or to both national classification and IPC

| B. | FIELDS SEARCHED |
| --- | --- |

Minimum documentation searched (classification system followed by classification symbols)

G06T 7/00 - 7/90, G06V10/00 - 20/90, G06V30/418, G06V40/16, G06V40/20

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2007-018176 A (SHARP KABUSHIKI KAISHA) 25 January 2007 (2007-01-25) paragraphs [0008], [0059]-[0060], [0064], [0066], [0086], [0091]-[0092], [0095]-[0096], [0099], [0101], [0106], [0108]-[0109], [0111]-[0112], [0117]-[0118], [0122]-[0124], [0128], [0134], fig. 1-3, 5 | 1, 6 |
| Y | | 2, 4 |
| A | | 3, 5 |
| | (Family: none) | |
| Y | JP 2007-017264 A (SHARP KABUSHIKI KAISHA) 25 January 2007 (2007-01-25) paragraphs [0005], [0049], [0052], [0055]-[0058], [0106], fig. 1, 9 (Family: none) | 2 |
| Y | CN 110930357 A (CHINA UNIVERSITY OF MINING AND TECHNOLOGY) 27 March 2020 (2020-03-27) claim 1 (Family: none) | 4 |

☐ Further documents are listed in the continuation of Box C.    ☐ See patent family annex.

| | |
| --- | --- |
| *  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **07 August 2024** | **20 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020027424 A